# EUROPEAN PATENT SPECIFICATION

(11) **EP 1 829 838 B1**
(45) Date of publication and mention of the grant of the patent: **24.08.2016**
(21) Application number: 07008392.8
(22) Date of filing: 09.03.2001
(51) Int. Cl.: C04B 28/04, C04B 111/00, C04B 111/30, C04B 111/40, C04B 20/00

(54) **Fiber cement building materials with low density additives**
Faserzementbaumaterialien mit Zusätzen mit geringer Dichte
Matériaux de construction en fibrociment contenant des additifs à faible densité

(30) Priority: 14.03.2000 US 189235 P; 09.03.2001 US 803456
(43) Date of publication of application: 05.09.2007
(62) Divisional of application: 01924151.2
(73) Proprietor: James Hardie Technology Limited, Dublin 2 (IE)
(72) Inventor: Gleeson, James A., Upland, CA 91786 (CA); Paradis, Kalynne H., CA 91739 (CA); Sloane, Brian P., NSW 2146 (AU); Melmeth, David L., CA 91784 (US); Seligman, Dean M., CA 92690 (US)
(74) Representative: Walshe, Triona Mary

(56) References cited:
- WO-A-00/21901
- DE-C- 19 858 342
- GB-A- 2 041 384
- JP-A- 8 217 561
- CHEMICAL ABSTRACTS + INDEXES, AMERICAN CHEMICAL SOCIETY. COLUMBUS, US, vol. 104:114971, 23 August 1985 (1985-08-23), XP000183799 KOKAI TOKKYO KOHO ISSN: 0009-2258
- CHEMICAL ABSTRACTS + INDEXES, AMERICAN CHEMICAL SOCIETY. COLUMBUS, US, vol. 108:209171, 9 February 1988 (1988-02-09), XP000158186 KOKAI TOKKYO KOHO ISSN: 0009-2258
- CHEMICAL ABSTRACTS + INDEXES, AMERICAN CHEMICAL SOCIETY. COLUMBUS, US, vol. 117:54763d, 10 August 1992 (1992-08-10), XP000374916 KOKAI TOKKYO KOHO ISSN: 0009-2258

## Description

### Background of the Invention

### Field of the Invention

This invention relates to building materials and methods for making the same, and more particularly to the addition of low density additives (LDA) into cementitious cellulose fiber-reinforced building materials.

### Description of the Related Art

Fiber-reinforced cement (FRC) products such as water-resistant building sheets have been used for building since 1895. In recent history reinforcing fibers used in such products have included not only asbestos fibers, but also cellulose fibers (see Australian Patent No. 515151), metal fibers, glass fibers and other natural and synthetic fibers. Typically, the density of such building sheets is from about 1.2-1.7 glum3, the variation in density typically being achievable by compression and dewatering of the fiber cement slurries used in manufacture and by varying the amount of fiber used. At these densities, the cement based matrix has few voids, which results in lower water absorption which has usually been considered necessary for good durability performance of cement matrices.

The densities of fiber cement described above mean the products are heavier than timber based products of equal dimension and have reduced workability. Workability encompasses the ease with which a board is handled and installed. Therefore, fiber cement building products are more difficult to cut, machine and nail than timber and timber based products. In this regard, the density of natural timber sheets typically ranges from about 0.7-0.9 g/cm³ for dry hardwoods and from about 0.38-0.6 g/cm³ for dry softwoods. Thus, a density-modified fiber cement material with density similar to timber may be expected to improve workability and enable lighter, more nailable, easier to cut and easier to machine products to be manufactured. However, this would have to be achieved while retaining the durability, fire resistant, rot proof and water resistant properties of fiber cement if the density modified fiber cement is to be used in the same range of applications.

Prior art describes how lightweight inorganic powders can be added as density modifiers in cement or fiber-reinforced cement materials. Low density additives for FRC products are defined as having a loose bulk density of about 0.8 g/cm³ (about 50 lbs./cu.ft.) or less. The typical low density additives (LDA) used include low bulk density calcium silicate hydrates (CSH), expanded polystyrene beads (EPS), expanded vermiculite, expanded perlite, expanded shale, and expanded clay. The density modification of cement-based materials with such inorganic particles is primarily achieved by introducing porosity into the material. Typically, the pore spaces are filled with water when the material is submerged in water or exposed to rain for a length of time. This causes these materials to have poorer wet to dry dimensional stability (moisture resistance), a higher saturated mass, and poor freeze-thaw resistance.

Accordingly, there is a need for a lightweight FRC building material and method for manufacturing the same with improved wet to dry dimensional stability over that of typical density modified products. Secondly, the lightweight building material should maintain similar wet to dry dimensional stability as that of FRC products without density modifiers if the density modified material is to be used in the same range of applications. In addition, it is highly preferred in some applications that the material also have a low saturated mass, good freeze-thaw resistance, and high temperature dimensional stability. Finally, it is also desirable to have a FRC building product where lower ranges of densities closer to that of timber and timber based products can be achieved with improved durability.

GB-A-2 041 384 discloses a composition for the manufacture of building boards and mouldings comprising potassium silicate and/or sodium silicate, light weight aggregate and cellulosic fibres.

### Summary of the Invention

Low density additives have been evaluated that have properties more desirable to FRC building materials than typical low density additives. The low density additive is hollow ceramic microspheres. An embodiment of the invention described herein comprises the addition of hollow ceramic microspheres (microspheres) into the FRC building material.

Referring now to the embodiment of the invention which, encompasses the addition of microspheres in fiber-cement products. Compared to current FRC products, the benefits of adding microspheres include the low density and improved workability of the product without increased moisture expansion or freeze-thaw degradation associated with the addition of lightweight inorganic materials to FRC mixes. Moreover, the addition of microspheres provides improved thermal dimensional stability for FRC material.

Accordingly, there is provided a building material formulation used to form a building product, comprising:
an hydraulic binder, wherein the hydraulic binder comprises 28.7%of the formulation by weight and wherein the hydraulic binder is Portland cement;
an aggregate, wherein the aggregate comprises 50.3% of the formulation by weight and wherein the aggregate is a silica aggregate;
cellulose fibers, wherein the cellulose fibers comprises 7.0% of the formulation by weight;
an additive, wherein the additive comprises 4.0% of the formulation by weight and wherein the additive is a metal hydroxide; and hollow ceramic microspheres at 10.0% of the formulation by weight, wherein the microspheres lower the density of the material to 1.16 g/cm³ and wherein the microspheres reduce moisture expansion of the material by about 5% or more as compared with a similar formulation without microspheres. In a further embodiment of the invention, there is provided a method of forming a low density building material comprising the steps of;
   (a) mixing a fiber cement formulation with water to create a slurry,
      the fibre cement formulation comprising an hydraulic binder, wherein the hydraulic binder comprises 28.7%of the formulation by weight and wherein the hydraulic binder is Portland cement;
      an aggregate, wherein the aggregate comprises 50.3% of the formulation by weight and wherein the aggregate is a silica aggregate;
      cellulose fibers, wherein the cellulose fibers comprises 7.0% of the formulation by weight;
      an additive, wherein the additive comprises 4.0% of the formulation by weight and wherein the additive is a metal hydroxide; and
      hollow ceramic microspheres at 10.0% of the formulation by weight, wherein the microspheres lower the density of the material to 1.16 g/cm³ and wherein the microspheres reduce the moisture expansion of the material by about 5% or more as compared with a similar formulation without microspheres;
   (b) processing the slurry into a green shaped article; and
   (c) curing the green shaped article to form the low density building material, the building material having a density of 1.2 g/cm3 or less and wherein the microspheres reduce the moisture expansion of the material by about 5% or more as compared with a similar formulation without microspheres.
Thus a building material is described comprising a fiber-reinforced cement formulation and a low density additive incorporated into the formulation. The addition of the low density additive to the formulation lowers the density of the building material as compared to a building material having an equivalent fiber-reinforced cement formulation without the low density additive, while at the same time the building material with the low density additive has less than about a 20% increase in moisture expansion as compared to a building material having an equivalent fiber-reinforced cement formulation without the low density additive. More preferably, the addition of the low density additive to the formulation lowers the density of the building material as compared to a building material having an equivalent fiber-reinforced cement formulation without the low density additive, while at the same time the low density additive either maintains or decreases the moisture expansion of the building material as compared to a building material having an equivalent fiber-reinforced cement formulation without the low density additive. The density of the building material is preferably about 1.2 g/cm³ or less.

A building material formulation is described comprising a hydraulic binder, an aggregate, fibers and hollow ceramic microspheres. The final building material has a density of about 1.2 g/cm³ or less. In one embodiment, about 4.1 %-15% cellulose fibers are provided in the formulation. In one preferred embodiment, the microspheres lower the density of the final building product by more than about 15%, even more preferably more than about 30%, as compared to a building product made from an equivalent formulation without microspheres. In another embodiment, the microspheres decrease the moisture expansion of the final product as compared to a building product made from an equivalent formulation without microspheres, preferably by more than about 5%, more preferably by more than about 10%. In one preferred embodiment, a combination of microspheres with other additional low density additives such as volcanic ash and/or low bulk density CSH are provided in the formulation.

A method of forming a low density building material is described, comprising mixing hydraulic binder, aggregate, fibers, hollow ceramic microspheres and water to create a slurry. The slurry is processed into a green shaped article. The green shaped article is cured to form the low density building material. The resulting building material has a density of about 1.2 g/cm³ or less. In one embodiment, more than about 4% fibers are mixed to create the slurry. In another embodiment, the article is cured by autoclaving.

### Brief Description of the Drawings

**FIGURE 1** is a graph of MIP pore size distribution for a Hatschek manufactured board with and without hollow ceramic microspheres after freeze-thaw testing.
**FIGURE 2** is a graph of BET pore size distribution for a Hatschek manufactured board with and without hollow ceramic microspheres after freeze-thaw testing.
**FIGURE 3** is an SEM photograph illustrating a Hatschek manufactured board with 10 wt.% hollow ceramic microspheres showing no degradation after 147 freeze-thaw cycles.

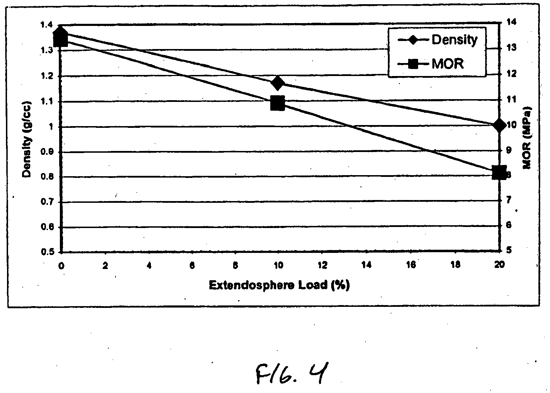

**FIGURE 4** is a graph illustrating the relationship between low density additive addition, density and strength.

### Detailed Description of the Preferred Embodiments

The preferred embodiments of the present invention describe a fiber-reinforced cement building material incorporating hollow ceramic microspheres. It will be appreciated that these additives may be used not only for the types of building materials described herein (i.e., fiber-reinforced materials), but may be used for other building materials as well.

### Embodiment - Hollow Ceramic Microspheres

An embodiment of this invention described herein encompasses the addition of hollow ceramic microspheres into cementitious cellulose fiber-reinforced building materials. This embodiment with hollow ceramic microspheres may be preferred over the previous reference example including volcanic ash because the addition of microspheres in FRC materials has even better moisture resistance coupled with other durability advantages, including freeze-thaw resistance, and thermal dimensional stability. It will be appreciated that the preferred embodiments for this embodiment are not limited to these types of microspheres or building materials. Thus, other types of fillers and building materials are also contemplated.

Microspheres can be natural, synthetic or a by-product. The material can be crystalline but is more typically amorphous or glass. One preferred type of microspheres are hollow ceramic microspheres commonly known as cenospheres. Cenospheres are a coal ash by-product that is typically separated from fly ash by a floatation process where the spheres float to the surface of water from clarifiers, ponds or lakes. The microspheres are available, for example, under the names Extendospheres^{®}, Recyclospheres^{®} and Zeeospheres^{®}, and are available from suppliers such as PQ Corporation of Chattanooga, Tennessee; Zeelan Industries Inc./3M of St. Paul, Minnesota; Sphere Service, Inc. of Oak Ridge, Tennessee; and Advanced Cement Technologies (A.C.T.) of Blaine, Washington.

The microspheres have typical particle sizes ranging from about 12 to 300 µm (microns), with median particle sizes ranging about 80 to 120 µm (microns). These sizes can, of course, vary between samples. The preferred microspheres typically contain about 62%-65% silica (SiO₂), about 23%-26% alumina (Al₂O₃) and about 3.0% to 4.0% iron oxides (Fe₂O₃). When introduced into a building material, the microspheres introduce pores in the material that may not readily fill with water which is advantageous to the material because of a lower saturated mass, improved wet to dry dimensional stability and improved freeze-thaw resistance.

One preferred formulation of this embodiment comprises a hydraulic binder, aggregate, fiber, hollow ceramic microspheres and additives. It will be appreciated that the various components of the preferred formulation for this embodiment can include any of the aforementioned materials listed for each component in the previous reference example. The material may also be produced by a number of conventional processes and curing conditions as listed and described in the first embodiment. If applicable, the preferences of the raw materials, processes, steps or conditions are similar to that of the previous reference example.

The microspheres can be used in a variety of building products all having different proportions of hydraulic binder, aggregate, microspheres and additives to obtain optimal properties for a particular application (e.g., siding, roofing, trim, soffit, backerboard for tile underlay, etc.). One preferred composition may include about 5%-80% Portland cement, about 0%-80% silica, about 4.1%-15% cellulose, about 0%-10% additives and about 2%-90% microspheres. One particular example of a typical formulation with microspheres is as follows:

| | |
|---|---|
| Portland Cement (binder) | 28.7% |
| Silica (aggregate) | 50.3% |
| Cellulose (fiber) | 7% |
| Metal Hydroxide (additive) | 4% |
| Microspheres (LDA) | 10%. |

It will be appreciated that the percentage of microspheres may be varied depending on the desired application. For instance, high addition percentages (up to about 90 wt.%) of microspheres may be suitable for building materials and systems that require some type of fire resistance rating. The high addition of microspheres provides the material with low thermal shrinkage.

### Test Results

### Density

Lowering the density with microspheres improves the overall workability of thicker products without compromising the advantages fiber cement products offer with regard to durability (i.e., dimensional stability) and structural integrity. These attributes are particularly advantageous for product thicknesses above about three eighths of an inch >0.952cm (>3/8"). The products with microspheres are lighter and therefore easier to handle. Secondly, products with microspheres are easier to nail and score / snap to the desired dimension. Furthermore, microsphere formulations reduce edge cracking or crumbling (if any) when the board is nailed close to the edge (e.g., 0.952-1.59cm, 3/8-5/8").

Tables 5 and 6 below display formulations and test results for FRC formulations, more particularly illustrating the advantages of adding microspheres to a formulation to improve density and workability.

**Table 5- Formulations for Table 6 Test Results**

| **Formula Identification** | **Portland Cement** | **Silica** | **Cellulose** | **Metal Hydroxide** | **Microspheres** |
|---|---|---|---|---|---|
| | **Hydraulic Binder** | **Aggregate** | **Fiber** | **Additive** | **LDA** |
| B | 28.7 | 60.3 | 7.0 | 4.0 | |
| A | 28.7 | 50.3 | 7.0 | 4.0 | 10.0 |

**Table 6 - Comparison of Properties With and Without Microspheres**

| **Test Method** | **Formulation A¹ 10% Microspheres** | **Formulation B Control** |
|---|---|---|
| **Density (Equilibrium Conditions)²** | | **No LDA** |
| (g/cm³) | 1.16 | 1.39 |
| **Nail Penetration (Equilibrium conditions)** | | |
| mm. of nail in material 50 mm (2 in.) = length of nail | 47.0 | 31.7 |
| standard deviation | 0.9 | 1.4 |

| | | |
|---|---|---|
| ¹ 10% microspheres in Formulation A replace 10% of the aggregate in the control, Formulation B. ² Equilibrium conditions- samples are conditioned in a controlled atmosphere of 73±4°F and 50±5% humidity. | | |

Table 6 displays test results of 0.9-1.5m (3' x 5') Hatschek manufactured board for Formulations A and B. Formulation A with 10 wt.% microspheres reduces the density by about 15% from 1.39 g/cm³ to 1.16 g/cm³ when compared to an equivalent formulation without microspheres (Formulation B). In addition, the ease of driving a nail into the board is improved. Testing revealed an increase in nail penetration from 31.7 mm to 47.0 mm, where 50 mm represents the length of the nail and the maximum nail penetration attainable.

Overall, testing of prototypes and products produced from trials has revealed about a 15% decrease in density for every 10% addition of microspheres and significant improvements in nailing. Thus, the addition of microspheres may advantageously be used to reduce the density of FRC building material by more than about 15%, even more preferably more than about 30%, as compared to an equivalent formulation without microspheres. The present inventors contemplate that with the addition of microspheres, the density of the material can be reduced to about 0.9 g/cm³ (see Table 10 below), and more preferably, even as low as about 0.5 g/cm³.

### Wet-Dry Dimensional Stability

As stated earlier, cured fiber cement formulations with conventional density modifiers have increased moisture expansion and increased moisture absorption on a percentage weight increase basis. One advantage of the preferred embodiments over prior art is that the addition of microspheres to reduce density does not increase moisture expansion from wet to dry. This is useful for a number of reasons previously mentioned in the first embodiment.

Table 7 below displays test results of 0.9-1.5m (3' x 5') Hatschek manufactured board with and without microspheres. Formulation A with 10% microspheres maintains, or more preferably reduces moisture expansion from that of Formulation B without microspheres. Formulations A and B are in Table 5 above.

**Table 7 - Comparison of Moisture Expansion With and Without Microspheres**

| **Test Method** | **Formulation A¹ 10% Microspheres** | **Formulation B Control No LDA** |
|---|---|---|
| **Density (Equilibrium Conditions)2** | | |
| (g/cm³) | 1.16 | 1.39 |
| **Moisture Expansion** | | |
| % Change | 0.15 ± 0.02 | 0.16 ± 0.02 |

| | | |
|---|---|---|
| ¹ 10% microspheres in Formulation A replace 10% of the aggregate in the control, Formulation B. ² Equilibrium conditions - samples are conditioned in a controlled atmosphere of 73±4°F and 50±5% humidity. | | |

Tables 8-10 below display formulations and test results for 25.4 x25.4cm (10" x 10") filter pressed prototype boards comparing microspheres with conventional density modifiers that do increase moisture expansion. Conventional density modifiers include low bulk density calcium silicate hydrate (CSH), and expanded polystyrene, vermiculite, perlite, shale or clay.

**Table 8- Formulations for Tables 9 and 10 Test Results**

| **Formula Identification** | **Portland Cement** | **Silica** | **Cellulose** | **Metal Hydroxide** | **Micro-spheres** | **Low Bulk Density CSH** | **Expanded Perlite** |
|---|---|---|---|---|---|---|---|
| | **Hydraulic Binder** | **Aggregate** | **Fiber** | **Additive** | **LDA** | **LDA** | **LDA** |
| B | 28.7 | 60.3 | 7.0 | 4.0 | | | |
| C | 35.2 | 52.8 | 8.0 | 4.0 | | | |
| D | 26.8 | 40.2 | 8.0 | | 25.0 | | |
| E | 26.8 | 40.2 | 8.0 | | | | 25.0 |
| F | 28.7 | 55.3 | 7.0 | 4.0 | | 5.0 | |

Table 9 data below displays a conventional low density additive, low bulk density CSH (Silasorb from Celite Corp.), at a 5% load that increases moisture expansion from that of the control, Formulation B.

**Table 9- Moisture Expansion of Low Bulk Density CSH**

| **Formula Identification** | **Description** | **Equilibrium Density** (g/cm³) | **Moisture Expansion %** |
|---|---|---|---|
| B | Control | 1.41 | 0.162 ± 0.02 |
| F2 | 5.0% low bulk density CSH | 1.27 | 0.188 ± 0.02 |

| | | | |
|---|---|---|---|
| ¹ Equilibrium conditions- samples are conditioned in a controlled atmosphere of 73±4°F and 50±5% humidity ² 5% low bulk density CSH in Formulation F replaces 5% of the aggregate in the control, Formulation B. | | | |

Table 10 below compares two formulations with the same base formula, one with 25 wt.% microspheres and the other with 25 wt.% perlite (Aztec XX from Aztec Perlite). Both the perlite and microsphere formulations decrease the density of control Formulation C from 1.3 g/cm³ to around 0.9 g/cm³, but moisture expansion increases with the perlite formulation and decreases with the microsphere formulation.

**Table 10- Moisture Expansion Comparison of Microspheres & Perlite.**

| **Formulation** | **Description** | **Equilibrium Density¹** (g/cm³) | **Moisture Expansion %** |
|---|---|---|---|
| C | Control | 1.31 | 0.230 ± 0.02 |
| D² | 25% Microspheres | 0.90 | 0.202 ± 0.02 |
| E² | 25% Perlite | 0.89 | 0.275 ± 0.02 |

| | | | |
|---|---|---|---|
| ¹ Equilibrium conditions- samples are conditioned in a controlled atmosphere of 73±4°F and 50±5% humidity ² For formulations D and E, microspheres displace both the aggregate and hydraulic binder in the control, Formulation C. | | | |

Thus, the addition of microspheres to the fiber cement formulation has the effect of maintaining or reducing moisture expansion of the final product. Preferably, the addition of microspheres can be adjusted to reduce the moisture expansion by about 5%, more preferably by about 10% or more, as compared to an equivalent formulation without microspheres.

### Freeze-Thaw Resistance

Freeze-thaw resistance refers to a material's resistance to damage when exposed to repeated cycles of freezing and thawing. For instance, concrete can be damaged by frost, and especially by repeated cycles of freezing and thawing. Damage usually begins with flaking at the surface, and gradually extends inward, though deep cracks may occur. Damage associated with freezing generally does not occur unless a sufficient quantity of water is present in the pores, and is minimal in dense concrete of low water-to-cement ratio and low permeability.

Similar to high density concrete, freeze-thaw damage is minimal in high-density fiber cement. In the preferred embodiments, the addition of microspheres into a FRC formulation produces a lower density cured product that maintains freeze-thaw resistance, unlike prior art where density modifiers added to the formulation reduce a material's freeze-thaw resistance.

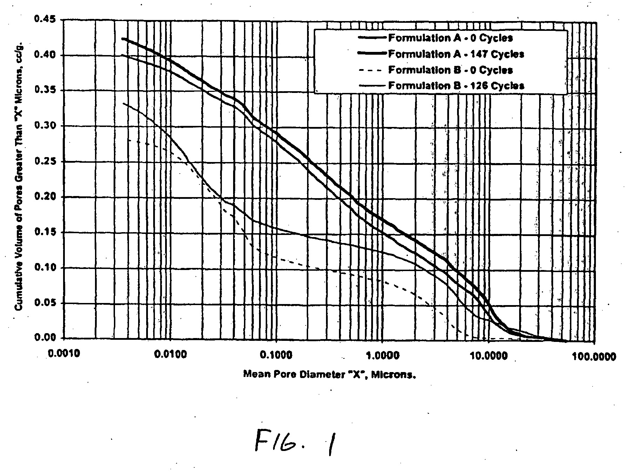

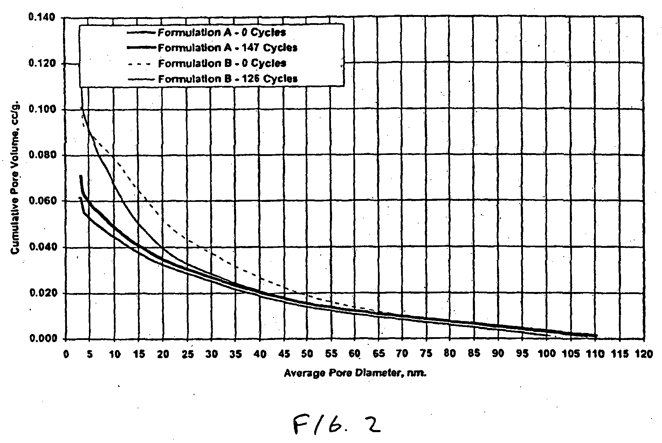

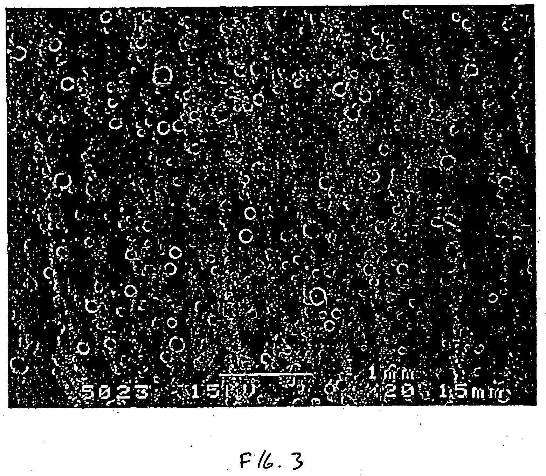

**FIGURES 1** and **2** display pore size distribution graphs of 0.9-1.5m (3' x 5') Hatschek manufactured board using MIP (mercury intrusion porosimetry) and BET (Brunauer, Emmett and Teller) methods. There is less change in pore size distribution for Formulation A with 10 wt.% microspheres after 147 freeze-thaw cycles than Formulation B without microspheres after 126 cycles. This demonstrates the microsphere formulation's resistance to structural change typical of freeze-thaw damage. To further support the microsphere formulation's resistance to freeze-thaw damage, **FIGURE 3** displays a SEM (scanning electron microscope) picture of a Hatschek manufactured board 0.9-1.5m (3' x 5') with 10 wt. % microspheres showing no signs of degradation after 147 freeze-thaw cycles whereas other wood cement composites would typically have degradation at this stage.

Freeze-thaw testing of **FIGURE 3** was performed in accordance with ASTM (American Standard Test Method) C666A titled "Standard Test Method for Resistance of Concrete to Rapid Freezing and Thawing." This test method has two different procedures, A or B. Procedure A was followed, meaning samples were submerged in water for both rapid freezing and thawing as opposed to rapid freezing in air and rapid thawing in water (procedure B). Samples are periodically removed from freeze-thaw cycling and visually inspected for degradation such as cracking, moisture expansion, sponginess/wetting throughout the sample, and overall structural integrity. Samples are moved from freeze-thaw cycling when the degree of degradation is such that the sample does not hold together and would therefore not be functional as a building product.

### High Temperature Dimensional Stability

Reducing a building material's thermal shrinkage prevents high temperature stresses and strains from occurring on building components. This improved thermal- dimensional stability allows building components in building fires to maintain a shield to fire without cracking, falling apart and allowing fire to spread quickly.

Tables 11 and 12 below display FRC formulations and test results for 25.4cm x 25.4cm (10" x 10") filter-pressed prototype boards, more particularly illustrating the advantages of adding microspheres to a formulation to improve high temperature dimensional stability.

**Table 11- Formulations for Table 12 Test Results**

| **Formula Identification** | **Portland Cement** | **Silica** | **Cellulose** | **Hydroxide** | **Microspheres** | **Low bulk Density CSH** |
|---|---|---|---|---|---|---|
| | **Hydraulic Binder** | **aggregate** | **Fiber** | **Additive** | **LDA** | **LDA** |
| A | 28.7 | 50.3 | 7.0 | 4.0 | 10.0 | |
| B | 28.7 | 60.3 | 7.0 | 4.0 | | |
| F | 28.7 | 55.3 | 7.0 | 4.0 | | 5.0 |
| G | 28.7 | 50.3 | 7.0 | 4.0 | | 10.0 |
| H | 28.7 | 40.3 | 7.0 | 4.0 | 20.0 | |

**Table 12-Thermal Shrinkage Comparison of Microspheres & Low Bulk Density CSH**

| **Formulation** | **Description** | **Equilibrium Density² (g/cm³)** | **Thermal Shrinkage¹ (%)** |
|---|---|---|---|
| B | Control | 1.41 | 3.07 |
| F3 | 5.0% low bulk density CSH | 1.21 | 7.27 |
| G³ | 10.0% low bulk density CSH | 1.15 | 8.09 |
| A³ | 10.0% microspheres | 1.15 | 4.41 |
| H³ | 20.0% microspheres | 1.01 | 4.21 |

| | | | |
|---|---|---|---|
| ¹ Refer to text below for description of thermal shrinkage test. ² Equilibrium conditions- samples are conditioned in a controlled atmosphere of 73±4°F and 50±5% humidity. ³ The percent LDA in formulations F, G, A & H replace an equivalent percent of aggregate in the control, Formulation B. | | | |

At lower load levels (e.g., about 10-20%), microspheres minimize the high temperature thermal shrinkage that occurs when typical inorganic density modifiers are introduced in fiber-cement formulations. Table 12 displays results of the percent thermal shrinkage obtained for Formulation A with 10 wt.% microspheres versus Formulation G with 10 wt.% low bulk density CSH (Silasorb from Celite Corp). Compared to the control (Formulation B), both formulations reduce density from about 1.4 to 1.15 g/cm³, but the formulation with low bulk density CSH has almost twice the thermal shrinkage as the formulation with microspheres. Moreover, Formulation H with 20.0 wt.% microspheres and a density of about 1.0 g/cm³ has over 40% less thermal shrinkage than Formulation F with only 5.0% low bulk density CSH (Silasorb from Celite Corp.) and a higher density of about 1.2 g/cm³.

High temperature thermal shrinkages were determined using a Thermomechanical Analyzer (TMA). Samples were cut to 10 by 25 mm with up to 12 mm thickness. The temperature of the saturated samples was ramped up at a rate of 20° C/minute to 950° C and sample dimensions were measured with a macroexpansion probe. Thermal shrinkage was taken as the overall dimensional change from 25° to 950° C, and reported as a percentage of total initial length.

Another advantage of using microspheres in fiber-cement formulations is thermal shrinkage decreases as microsphere additions increase. Thermal shrinkage with microspheres is inversely proportional to the weight percent added, whereas thermal shrinkage with conventional density modifiers is directly proportional to the weight percent added. Thus, formulations with higher additions of microspheres (up to about 90 wt.%) have lower thermal shrinkage than formulations with lower additions (up to about 20 wt.%).

Table 13 below provides formulations with high additions of microspheres and Table 14 provides the high temperature thermal shrinkage results. Formulations I and J with 70 and 90 wt.% microsphere additions produce thermal shrinkage results of about 2.7% and 1.1 %, respectively. Thermal shrinkage for Formulations I and J were determined by cutting samples approximately 10 x 10 x 40 mm long, oven drying, firing for one hour at 1000° C with a muffle furnace, and allowing to cool to oven dry conditions. The percent thermal shrinkage was determined by measuring the overall difference in length from oven dry to 1000° C, and dividing by the initial oven dry length.

**Table 13- Formulations For Table 14 Results**

| **Formula Identification** | **Portland Cement** | **Silica Fume** | **Cellulose** | **Micro spheres** |
|---|---|---|---|---|
| | **Hydraulilic Binder** | **Aggragate** | **Fiber** | **LDA** |
| I | 26.2 | 2.9 | 0.9 | 70.0 |
| J | 8.7 | 1.0 | 0.3 | 90.0 |

**Table 14- Thermal Shrinkage of High-Addition Microsphere Formulations**

| **Formula Identification** | **Thermal Shrinkage%** |
|---|---|
| I | 2.7 |
| J | 1.1 |

Thus, in an embodiment where 20% microspheres are used in the fiber cement formulation, the thermal shrinkage of the final product as compared to an equivalent product made from a formulation without microspheres increases by less than about 50%. As described above, with increasing percentages of microspheres, the percent thermal shrinkage decreases, even to a point where, as compared to a product without microspheres, the final product with microspheres exhibits a lower thermal shrinkage, preferably lower from about 10% to about 70%. More particularly, the thermal shrinkage of the product with microspheres is preferably less than about 4%.

### Conclusions

In general, it will be appreciated that the preferred embodiments of the present invention, more particularly, microspheres have several advantages over the prior art. These materials have a low density compared to conventional fiber cement building products. This enables production of a thicker product (0.95cm to 2.54cm) (e.g., 3/8" to 1.0") that is lighter and therefore easier to handle, cut, nail and install.

The materials also have improved wet-dry dimensional stability and the building material's durability is improved such that building panels do not excessively shrink and crack. Also, excessive gaps between panels or planks do not open up after changes in humidity or from wet to dry seasons.

With respect to at least the formulations and building products incorporating hollow ceramic microspheres, the materials' freeze-thaw resistance is maintained at lower density, unlike most inorganic density modified fiber cement materials. This gives these materials good durability in climates that experience frequent freezing and thawing conditions.

These materials incorporating microspheres also have improved fire resistance properties because of improved thermal dimensional stability relative to typical low density additives. Thus, the materials are stable in building fires as a building component such that the material can maintain a shield to fire without cracking and falling apart and allowing fire to spread quickly.

The preferred embodiments have applicability to a number of building product applications, including but not limited to building panels (interior and exterior), tile backer board (walls and floors), siding, soffit, trim, roofing, fencing and decking. The embodiments illustrated and described above are provided merely as examples of certain preferred embodiments of the present invention.

## Claims

1. A building material formulation used to form a building product, comprising:
an hydraulic binder, wherein the hydraulic binder comprises 28.7% of the formulation by weight and wherein the hydraulic binder is Portland cement;
an aggregate, wherein the aggregate comprises 50.3% of the formulation by weight and wherein the aggregate is a silica aggregate;
cellulose fibers, wherein the cellulose fibers comprise 7.0% of the formulation by weight;
an additive, wherein the additive comprises 4.0% of the formulation by weight and wherein the additive is a metal hydroxide; and
hollow ceramic microspheres at 10.0% of the formulation by weight, wherein the microspheres lower the density of the material to 1.16 g/cm³ and wherein the microspheres reduce moisture expansion of the material by about 5% or more as compared with a similar formulation without microspheres.

2. The building material formulation as claimed in Claim 1, wherein the hollow ceramic microspheres are formed from any one of natural, synthetic or by-product ceramic material.

3. The building material formulation as claimed in Claim 1 or Claim 2, wherein the hollow ceramic microspheres are cenospheres.

4. The building material formulation as claimed in any one of the preceding claims, wherein the particle size of the hollow ceramic microspheres is between 12 to 300 µm and with median particle size between 80 to 120 µm.

5. The building material formulation as claimed in any one of the preceding claims, wherein the percentage moisture expansion of the building material is between 0.13% and 0.17%.

6. The building material formulation as claimed in any one of the preceding claims, wherein the formed building product is any one of backer board, building panel, soffit, or trim which are suitable for use in interior or exterior building applications such as tiling, siding, roofing, fencing or decking applications.

7. A method of forming a low density building material comprising the steps of;
(a) mixing a fiber cement formulation with water to create a slurry,
the fibre cement formulation comprising an hydraulic binder, wherein the hydraulic binder comprises 28.7% of the formulation by weight and wherein the hydraulic binder is Portland cement;
an aggregate, wherein the aggregate comprises 50.3% of the formulation by weight and wherein the aggregate is a silica aggregate;
cellulose fibers, wherein the cellulose fibers comprise 7.0% of the formulation by weight; an additive, wherein the additive comprises 4.0% of the formulation by weight and wherein the additive is a metal hydroxide; and
hollow ceramic microspheres at 10.0% of the formulation by weight, wherein the microspheres lower the density of the material to 1.16 g/cm³ and wherein the microspheres reduce moisture expansion of the material by about 5% or more as compared with a similar formulation without microspheres;
(b) processing the slurry into a green shaped article; and
(c) curing the green shaped article to form the low density building material, the building material having a density of 1.16 g/cm³ and wherein the microspheres reduce the moisture expansion of the material by about 5% or more as compared with a similar formulation without microspheres.

8. The method of forming a low density building product as claimed in Claim 7, wherein the hollow ceramic microspheres of step (a) are formed from any one of natural, synthetic or by-product ceramic material.

9. The method of forming a low density building product as claimed in Claim 7 or 8, wherein the hollow ceramic microspheres of step (a) are cenospheres.

10. The method of forming a low density building product as claimed in Claim 9, wherein the particle size of the hollow ceramic microspheres is between 12 to 300 µm with median particle size between 80 to 120 µm.

11. The method of forming a low density building product as claimed in any one of Claims 7 to 10, wherein step (b) further comprises processing the slurry into a green shaped article using a process selected from the group comprising a Hatschek sheet process; Mazza pipe process; Magnani process; Injection Moulding; Extrusion; Hand Lay-up; Moulding; Casting; Filter Pressing or Flow on Machine.

12. The method of forming a low density building product as claimed in any one of Claims 7 to 11, wherein the article is cured at step (c) by autoclaving.

13. The method of forming a low density building product as claimed in any one of Claims 7 to 12, wherein the percentage moisture expansion of the building material formed at step (c) is between 0.13% and 0.17%.

## Patentansprüche

1. Baumaterialformulierung, die zum Bilden eines Bauprodukts verwendet wird, umfassend:
ein hydraulisches Bindemittel, wobei das hydraulische Bindemittel 28,7 Gew.-% der Formulierung umfasst und wobei das hydraulische Bindemittel Portland-Zement ist;
ein Aggregat, wobei das Aggregat 50,3 Gew.-% der Formulierung umfasst und wobei das Aggregat ein Kieselsäureaggregat ist;
Cellulosefasern, wobei die Cellulosefasern 7,0 Gew.-% der Formulierung umfassen;
einen Zusatz, wobei der Zusatz 4,0 Gew.-% der Formulierung umfasst und wobei der Zusatz ein Metallhydroxid ist; und
keramische Mikrohohlkugeln mit 10,0 Gew.-% der Formulierung, wobei die Mikrokugeln die Dichte des Materials auf 1,16 g/cm³ verringern, und wobei die Mikrokugeln die Feuchtigkeitsausdehnung des Materials um etwa 5 % oder mehr im Vergleich zu einer ähnlichen Formulierung ohne Mikrokugeln reduzieren.

2. Baumaterialformulierung nach Anspruch 1, wobei die keramischen Mikrohohlkugeln aus natürlichem, synthetischem oder Nebenprodukt-Keramikmaterial ausgebildet sind.

3. Baumaterialformulierung nach Anspruch 1 oder Anspruch 2, wobei die keramischen Mikrohohlkugeln Cenospheres sind.

4. Baumaterialformulierung nach einem der vorhergehenden Ansprüche, wobei die Teilchengröße der keramischen Mikrohohlkugeln zwischen 12 und 300 µm liegt und die mittlere Teilchengröße zwischen 80 und 120 µm.

5. Baumaterialformulierung nach einem der vorhergehenden Ansprüche, wobei die anteilige Feuchtigkeitsausdehnung des Baumaterials zwischen 0,13 % und 0,17 % beträgt.

6. Baumaterialformulierung nach einem der vorhergehenden Ansprüche, wobei das gebildete Bauprodukt eines von Fliesenträger, Bauplatte, Laibung oder Verkleidung ist, die sich zur Verwendung in Bauanwendungen drinnen oder draußen eignen, z. B. zum Fliesen, Außenverkleiden, Überdachen, Umzäunen oder für Bodenanwendungen.

7. Verfahren zum Bilden eines Baumaterials von geringer Dichte, umfassend die Schritte:
(a) Mischen einer Faserzementformulierung mit Wasser zum Erzeugen einer Aufschlämmung, wobei die Faserzementformulierung umfasst: ein hydraulisches Bindemittel, wobei das hydraulische Bindemittel 28,7 Gew.-% der Formulierung umfasst und wobei das hydraulische Bindemittel Portland-Zement ist;
ein Aggregat, wobei das Aggregat 50,3 Gew.-% der Formulierung umfasst und wobei das Aggregat ein Kieselsäureaggregat ist;
Cellulosefasern, wobei die Cellulosefasern 7,0 Gew.-% der Formulierung umfassen;
einen Zusatz, wobei der Zusatz 4,0 Gew.-% der Formulierung umfasst und wobei der Zusatz ein Metallhydroxid ist; und
keramische Mikrohohlkugeln mit 10,0 Gew.-% der Formulierung, wobei die Mikrokugeln die Dichte des Materials auf 1,16 g/cm³ verringern, und wobei die Mikrokugeln die Feuchtigkeitsausdehnung des Materials um etwa 5 % oder mehr im Vergleich zu einer ähnlichen Formulierung ohne Mikrokugeln reduzieren;
(b) Verarbeiten der Aufschlämmung zu einem Formkörperrohling; und
(c) Aushärten des Formkörperrohlings zum Bilden des Baumaterials von geringer Dichte, wobei das Baumaterial eine Dichte von 1,16 g/cm³ aufweist und wobei die Mikrokugeln die Feuchtigkeitsausdehnung des Materials um etwa 5 % oder mehr im Vergleich zu einer ähnlichen Formulierung ohne Mikrokugeln reduzieren.

8. Verfahren zum Bilden eines Bauprodukts von geringer Dichte nach Anspruch 7, wobei die keramischen Mikrohohlkugeln aus Schritt (a) aus natürlichem, synthetischem oder Nebenprodukt-Keramikmaterial ausgebildet sind.

9. Verfahren zum Bilden eines Bauprodukts von geringer Dichte nach Anspruch 7 oder 8, wobei die keramischen Mikrohohlkugeln aus Schritt (a) Cenospheres sind.

10. Verfahren zum Bilden eines Bauprodukts von geringer Dichte nach Anspruch 9, wobei die Teilchengröße der keramischen Mikrohohlkugeln zwischen 12 und 300 µm liegt und die mittlere Teilchengröße zwischen 80 und 120 µm.

11. Verfahren zum Bilden eines Bauprodukts von geringer Dichte nach einem der Ansprüche 7 bis 10, wobei Schritt (b) ferner das Verarbeiten der Aufschlämmung zu einem Formkörperrohling mithilfe eines Verfahrens umfasst, das ausgewählt ist aus der Gruppe, umfassend ein Hatschek Sheet-Verfahren; Mazza-Rohrverfahren; Magnani-Prozess; Spritzgießen; Extrusion; Hand-Auflegetechnik; Formen; Gießen; Filterpressen oder Strömungsbearbeiten.

12. Verfahren zum Bilden eines Bauprodukts von geringer Dichte nach Anspruch 7 bis 11, wobei der Artikel bei Schritt (c) durch einen Autoklav ausgehärtet wird.

13. Verfahren zum Bilden eines Bauprodukts von geringer Dichte nach Anspruch 7 bis 12, wobei die anteilige Feuchtigkeitsausdehnung des Baumaterials, das bei Schritt (c) gebildet wurde, zwischen 0,13 % und 0,17 % beträgt.

## Revendications

1. Formulation de matériau de construction utilisée pour former un produit de construction, comprenant : un liant hydraulique, le liant hydraulique représentant 28,7 % en poids de la formulation et le liant hydraulique étant un ciment Portland ;
un agrégat, l'agrégat représentant 50,3 % en poids de la formulation et l'agrégat étant un agrégat de silice ;
des fibres de cellulose, les fibres de cellulose représentant 7,0 % en poids de la formulation ;
un additif, l'additif représentant 4,0 % en poids de la formulation et l'additif étant un hydroxyde de métal ; et
des microsphères creuses en céramique représentant 10,0 % en poids de la formulation, les microsphères faisant diminuer la densité du matériau jusqu'à 1,16 g/cm³ et les microsphères réduisant le gonflement à l'humidité du matériau d'environ 5 % ou plus par rapport à une formulation similaire sans microsphères.

2. Formulation de matériau de construction selon la revendication 1, dans laquelle les microsphères creuses en céramique sont formées de n'importe quel matériau parmi un matériau naturel, un matériau synthétique et un sous-produit en céramique.

3. Formulation de matériau de construction selon la revendication 1 ou la revendication 2, dans laquelle les microsphères creuses en céramique sont des cénosphères.

4. Formulation de matériau de construction selon l'une quelconque des revendications précédentes, dans laquelle la taille de particule des microsphères creuses en céramique est de 12 à 300 µm et la taille de particule médiane est de 80 µm à 120 µm.

5. Formulation de matériau de construction selon l'une quelconque des revendications précédentes, dans laquelle le pourcentage de gonflement à l'humidité du matériau de construction est de 0,13 % à 0,17 %.

6. Formulation de matériau de construction selon l'une quelconque des revendications précédentes, dans laquelle le produit de construction formé est l'un quelconque d'un panneau d'appui, d'un panneau de construction, d'un intrados, ou d'un matériau de garniture convenant pour une utilisation dans des applications de construction intérieures ou extérieures telles que les carrelages, les parements, les toitures, les clôtures ou les planchéiages.

7. Procédé de formation d'un matériau de construction de faible densité, comprenant les étapes qui consistent à :
(a) mélanger une formulation de fibrociment avec de l'eau pour produire un coulis,
la formulation de fibrociment comprenant un liant hydraulique, le liant hydraulique représentant 28,7 % en poids de la formulation et le liant hydraulique étant un ciment Portland ;
un agrégat, l'agrégat représentant 50,3 % en poids de la formulation et l'agrégat étant un agrégat de silice ;
des fibres de cellulose, les fibres de cellulose représentant 7,0 % en poids de la formulation ;
un additif, l'additif représentant 4,0 % en poids de la formulation et l'additif étant un hydroxyde de métal ; et
des microsphères creuses en céramique représentant 10,0 % en poids de la formulation, les microsphères faisant diminuer la densité du matériau jusqu'à 1,16 g/cm³ et les microsphères réduisant le gonflement à l'humidité du matériau d'environ 5 % ou plus par rapport à une formulation similaire sans microsphères ;
(b) transformer le coulis en un article formé vert ; et
(c) durcir l'article formé vert pour former le matériau de construction de faible densité, le matériau de construction ayant une densité de 1,16 g/cm³ et les microsphères réduisant le gonflement à l'humidité du matériau d'environ 5 % ou plus par rapport à une formulation similaire sans microsphères.

8. Procédé de formation d'un produit de construction de faible densité selon la revendication 7,
dans lequel les microsphères creuses en céramique de l'étape (a) sont formées de n'importe quel matériau parmi un matériau naturel, un matériau synthétique et un sous-produit en céramique.

9. Procédé de formation d'un produit de construction de faible densité selon la revendication 7 ou 8,
dans lequel les microsphères creuses en céramique de l'étape (a) sont des cénosphères.

10. Procédé de formation d'un produit de construction de faible densité selon la revendication 9,
dans lequel la taille de particule des microsphères creuses en céramique est de 12 à 300 µm et la taille de particule médiane est de 80 µm à 120 µm.

11. Procédé de formation d'un produit de construction de faible densité selon l'une quelconque des revendications 7 à 10, dans laquelle l'étape (b) comprend en outre la transformation du coulis en un article formé vert en utilisant un procédé sélectionné dans le groupe constitué d'un procédé Hatschek pour la formation de plaques, d'un procédé Mazza pour la formation de tuyaux, du procédé Magnani, du moulage par injection, de l'extrusion, de la superposition manuelle, du moulage, de la coulée, de l'emploi d'un filtre-presse ou de l'emploi d'une machine de formation par écoulement.

12. Procédé de formation d'un produit de construction de faible densité selon l'une quelconque des revendications 7 à 11, dans lequel l'article est durci à l'étape (c) par autoclavage.

13. Procédé de formation d'un produit de construction de faible densité selon l'une quelconque des revendications 7 à 12, dans lequel le pourcentage de gonflement à l'humidité du matériau de construction formé à l'étape (c) est de 0,13 % à 0,17 %.
